# EUROPEAN PATENT APPLICATION

(11) **EP 4 534 312 A1**
(43) Date of publication of application: **09.04.2025**
(21) Application number: 23815255.7
(22) Date of filing: 31.05.2023
(51) Int. Cl.: B60K 6/26, B60K 6/00

(54) **POWERTRAIN SYSTEM AND VEHICLE**

(30) Priority: 31.05.2022 CN 202210616333
(71) Applicant: BYD Company Limited, Shenzhen, Guangdong 518118 (CN)
(72) Inventor: LIAO, Yinsheng, Shenzhen, Guangdong 518118 (CN); ZHANG, Feng, Shenzhen, Guangdong 518118 (CN); ZHAO, Gaoming, Shenzhen, Guangdong 518118 (CN); ZHU, Yongtian, Shenzhen, Guangdong 518118 (CN); ZHU, Ning, Shenzhen, Guangdong 518118 (CN)
(74) Representative: Mathys & Squire
(86) International application number: PCT/CN2023/097447
(87) International publication number: WO 2023/232078

(57) **Abstract**

A powertrain system (1000) and a vehicle. The powertrain system (1000) comprises: a conversion device (10), a first motor (200), a second motor (5000), and an engine (300), at least one of the first motor (200) and the engine (300) being used for selectively outputting power to a first traveling end by means of the conversion device (10), the engine (300) being used for selectively outputting power to the first motor (200) by means of the conversion device (10), and the second motor (5000) being in driving connection with the engine (300) so that the powertrain system (1000) has a first simultaneous driving and electricity-generating mode, in which the first motor (200) outputs power to the first traveling end by means of the conversion device (10), and the second motor (5000), driven by the engine (300), generates electricity.

## Description

### CROSS-REFERENCE TO RELATED APPLICATIONS

The present disclosure is proposed based on Chinese Patent Application No. 202210616333.1 filed on May 31, 2022, and claims priority to the Chinese patent application. The entire content of the above-referenced application is incorporated herein by reference.

### FIELD

The present disclosure relates to the field of vehicles, and more specifically, to a powertrain system and a vehicle having the powertrain system.

### BACKGROUND

In the related art, in a hybrid vehicle, a motor may be arranged in both a front drive axle and a rear drive axle to be used as a power source, and an engine may be selectively arranged in one of the drive axles to form a combined hybrid.

However, when a driving motor connected with the engine participates in driving, power of a battery continuously decreases and cannot be effectively supplemented, which may affect use of a pure electric driving mode of a vehicle.

### SUMMARY

The present disclosure is intended to resolve at least one of the technical problems of the related art. The present disclosure provides a powertrain system. The powertrain system can supplement a vehicle with electric power, to prevent lack of electric power of the vehicle, thereby effectively avoiding impact on use of a pure electric driving mode of the vehicle.

The present disclosure further provides a vehicle.

The powertrain system of the present disclosure includes:
a conversion device, a first motor, a second motor, and an engine.

At least one of the first motor and the engine is configured to selectively output power to a first traveling end by means of the conversion device.

The engine is configured to selectively output the power to the first motor by means of the conversion device, to drive the first motor to generate electricity.

The second motor is in driving connection with the engine, so that the powertrain system has a first simultaneous driving and electricity-generating mode.

In the first simultaneous driving and electricity-generating mode, the first motor outputs the power to the first traveling end by means of the conversion device, and the second motor, driven by the engine, generates electricity.

According to the powertrain system of the present disclosure, the second motor generates electricity, which can supplement the vehicle with electric power, to prevent lack of electric power of the vehicle, thereby effectively avoiding impact on use of a pure electric driving mode of the vehicle.

In some embodiments of the present disclosure, the second motor is arranged on the engine.

In some embodiments of the present disclosure, an engine output shaft of the engine is parallel to a second motor output shaft of the second motor.

In some embodiments of the present disclosure, the engine output shaft of the engine is in driving connection with the second motor output shaft of the second motor by means of a belt pulley.

In some embodiments of the present disclosure, the powertrain system further includes a third motor. The third motor is configured to output power to a second traveling end.

In some embodiments of the present disclosure, the powertrain system has a second simultaneous driving and electricity-generating mode. In the second simultaneous driving and electricity-generating mode, first motor outputs the power to the first traveling end by means of the conversion device in the second simultaneous driving and electricity-generating mode, the third motor outputs the power to the second traveling end, and the second motor, driven by the engine, generates electricity.

In some embodiments of the present disclosure, the conversion device includes a first clutch, a second clutch, and a transmission member. The first clutch and the second clutch are connected with the transmission member. The first motor is in driving connection with the transmission member. the engine is connected with the first clutch, to cause the engine to selectively output the power to the first motor. The second clutch is connected between the transmission member and the first traveling end, to cause the transmission member to be selectively connected with the first traveling end.

In some embodiments of the present disclosure, the first clutch and the second clutch are arranged on two axial sides of the transmission member. The first clutch is arranged on a side of the transmission member close to the engine. The second clutch is arranged on a side of the transmission member away from the engine.

In some embodiments of the present disclosure, the first clutch includes a first housing and a first transmission portion. The first housing is fixedly connected with the transmission member. The first transmission portion is connected with the engine. The first transmission portion is selectively connected with the first housing by means of a clutch plate.

The second clutch includes a second housing and a second transmission portion. The second housing is fixedly connected with the transmission member. The second transmission portion is selectively connected with the second housing by means of a clutch plate.

In some embodiments of the present disclosure, the powertrain system further includes an energy storage unit. The energy storage unit is electrically connected with the first motor and the second motor.

In some embodiments of the present disclosure, in the first simultaneous driving and electricity-generating mode, the first housing is disconnected from the first transmission portion, the second housing is connected with the second transmission portion, the engine and the first motor rotate, the power of the engine is transmitted to the second motor, to drive the second motor to generate electricity, and the power of the first motor is transmitted to the second transmission portion successively through the transmission member and the second housing, so as to be transmitted to the first traveling end.

In some embodiments of the present disclosure, the powertrain system further has the second simultaneous driving and electricity-generating mode. In the second simultaneous driving and electricity-generating mode, the first housing is disconnected from the first transmission portion, the second housing is connected with the second transmission portion, the third motor rotates, the power of the third motor is outputted to the transmission connected with the second traveling end, so as to be transmitted to the second traveling end, the first motor rotates, the power of the first motor is transmitted to the second transmission portion successively through the transmission member and the second housing, so as to be transmitted to the first traveling end, the engine rotates, and the power of the engine is transmitted to the second motor, to cause the second motor to generate electricity.

The powertrain system further has a third simultaneous driving and electricity-generating mode. In the third simultaneous driving and electricity-generating mode, the first housing is connected with the first transmission portion, the second housing is connected with the second transmission portion, the engine and the first motor rotate,
the power of the engine is transmitted to the second motor, to drive the second motor to generate electricity, the power of the engine successively passes through the first transmission portion, the first housing, the transmission member, and the second housing to be transmitted to the second transmission portion, so as to be transmitted to the first traveling end,
the power of the first motor is transmitted to the second transmission portion successively through the transmission member and the second housing, so as to be transmitted to the first traveling end,
the third motor rotates, and the power of the third motor is outputted to the transmission connected with the second traveling end, so as to be transmitted to the second traveling end,

In some embodiments of the present disclosure, the powertrain system includes a first engine starting mode. In the first engine starting mode, the first housing is connected with the first transmission portion, the second housing is disconnected from the second transmission portion, the first motor rotates, and the power outputted by the first motor successively passes through the transmission member, the first housing, and the first transmission portion to drive the engine to start.

The powertrain system further has a second engine starting mode. In the second engine starting mode, the first housing is connected with the first transmission portion, the second housing is connected with the second transmission portion, the first motor rotates, the power outputted by the first motor successively passes through the transmission member, the first housing, and the first transmission portion to drive the engine to start, the power outputted by the first motor successively passes through the transmission member, the second housing, and the second transmission portion to be transmitted to the first traveling end.

The powertrain system further has a third engine starting mode. In the third engine starting mode, the second motor rotates, and the power outputted by the second motor is transmitted to the engine to drive the engine to start.

In some embodiments of the present disclosure, the powertrain system further has a first electricity generating mode. In the first electricity generating mode, the second housing is disconnected from the second transmission portion, the first housing is connected with the first transmission portion, the engine rotates, the power outputted by the engine successively passes through the first transmission portion, the first housing, and the transmission member to be transmitted to the first motor, and to drive the first motor to generate electricity.

The powertrain system further has a second electricity generating mode. In the second electricity generating mode, the first housing is connected with the first transmission portion, the second housing is connected with the second transmission portion, the engine rotates, the power outputted by the engine successively passes through the first transmission portion, the first housing, and the transmission member to be transmitted to the first motor, and to drive the first motor to generate electricity, and the power of the engine successively passes through the first transmission portion, the first housing, the transmission member, and the second housing to be transmitted to the second transmission portion, so as to be transmitted to the first traveling end.

The powertrain system further has a third electricity generating mode. In the third electricity generating mode, the first housing is disconnected from the first transmission portion, the engine rotates, the power of the engine is transmitted to the second motor, so as to cause the second motor to generate electricity.

The powertrain system further has a fourth electricity generating mode. In the fourth electricity generating mode, the second housing is disconnected from the second transmission portion, the first housing is connected with the first transmission portion, the engine rotates, the power of the engine is transmitted to the second motor, so as to cause the second motor to generate electricity, and the power outputted by the engine successively passes through the first transmission portion, the first housing, and the transmission member to be transmitted to the first motor, and to drive the first motor to generate electricity.

In some embodiments of the present disclosure, the powertrain system further has a first energy feedback mode. In the first energy feedback mode, the first housing is disconnected from the first transmission portion, the second housing is connected with the second transmission portion, and the power of the first traveling end is outputted to the first motor successively through the second transmission portion, the second housing, and the transmission member, so as to drive the first motor to generate electricity;

The powertrain system further has a second energy feedback mode. In the second energy feedback mode, the first housing is disconnected from the first transmission portion, the second housing is disconnected from the second transmission portion, and the power of the second traveling end is outputted to the third motor through the transmission connected with the second traveling end, so as to drive the third motor to generate electricity.

The powertrain system further has a third energy feedback mode. In the third energy feedback mode, the first housing is disconnected from the first transmission portion, the second housing is connected with the second transmission portion, the power of the first traveling end is outputted to the first motor successively through the second transmission portion, the second housing, and the transmission member, so as to drive the first motor to generate electricity, and
the power of the second traveling end is outputted to the third motor through the transmission, so as to drive the third motor to generate electricity.

In some embodiments of the present disclosure, the powertrain system further has a first pure electric driving mode. In the first pure electric driving mode, the first housing is disconnected from the first transmission portion, the second housing is connected with the second transmission portion, the first motor rotates, the power of the first motor is transmitted to the second transmission portion successively through the transmission member and the second housing, so as to be transmitted to the first traveling end.

The powertrain system further has a second pure electric driving mode. In the second pure electric driving mode, the first housing is disconnected from the first transmission portion, the second housing is disconnected from the second transmission portion, the third motor rotates, the power outputted by the third motor is transmitted to the transmission, so as to be transmitted to the second traveling end.

The powertrain system further has a third pure electric driving mode. In the third pure electric driving mode, the first housing is disconnected from the first transmission portion, the second housing is connected with the second transmission portion, the third motor rotates, the power outputted by the third motor is transmitted to the transmission, so as to be transmitted to the second traveling end, the first motor rotates, and the power of the first motor is transmitted to the second transmission portion successively through the transmission member and the second housing, so as to be transmitted to the first traveling end.

In some embodiments of the present disclosure, the powertrain system further has a first hybrid driving mode. In the first hybrid driving mode, the first housing is connected with the first transmission portion, the second housing is connected with the second transmission portion, the engine and the first motor rotate, the power of the engine successively passes through the first transmission portion, the first housing, the transmission member, and the second housing to be transmitted to the second transmission portion, so as to be transmitted to the first traveling end,

The power of the first motor successively passes through the transmission member and the second housing to be transmitted to the second transmission portion, so as to be transmitted to the first traveling end.

In some embodiments of the present disclosure, the powertrain system further has a second hybrid driving mode. In the second hybrid driving mode, the first housing is connected with the first transmission portion, the second housing is connected with the second transmission portion, the engine rotates, the power of the engine successively passes through the first transmission portion, the first housing, the transmission member, and the second housing to be transmitted to the second transmission portion, so as to be transmitted to the first traveling end,
the third motor rotates, and the power of the third motor is outputted to the transmission, so as to be transmitted to the second traveling end.

In some embodiments of the present disclosure, the powertrain system further has a third hybrid driving mode. In the third hybrid driving mode, the first housing is connected with the first transmission portion, the second housing is connected with the second transmission portion, the engine and the first motor rotate, the power of the engine successively passes through the first transmission portion, the first housing, the transmission member, and the second housing to be transmitted to the second transmission portion, so as to be transmitted to the first traveling end,
the power of the first motor successively passes through the transmission member and the second housing to be transmitted to the second transmission portion, so as to be transmitted to the first traveling end,
the third motor rotates, and the power of the third motor is outputted to the transmission to be transmitted to the second traveling end.

The vehicle of the present disclosure includes the foregoing powertrain system.

The vehicle of the present disclosure includes the powertrain system in any of the foregoing embodiments. Since the vehicle of the present disclosure is provided with the powertrain system in any of the foregoing embodiments, the vehicle has a hybrid mode and can achieve connection and disconnection between multiple power inputs and outputs. A clutch assembly has a high integration and a fast response speed during power switching. In addition, the powertrain system of the vehicle has a compact structure, so that the vehicle has a large passenger compartment.

Part of additional aspects and advantages of the present disclosure is provided in the following description. The part will be apparent from the following description, or is learned through practice of the present disclosure.

### BRIEF DESCRIPTION OF THE DRAWINGS

FIG. 1 is a schematic diagram of a powertrain system mounted to a vehicle according to an embodiment of the present disclosure;
FIG. 2 is an enlarged view of A in FIG. 1;
FIG. 3 is a sectional view of a conversion device of the powertrain system according to an embodiment of the present disclosure;
FIG. 4 is a schematic diagram of another embodiment of the powertrain system according to an embodiment of the present disclosure;
FIG. 5 is a schematic diagram of another embodiment of the powertrain system according to an embodiment of the present disclosure;
FIG. 6 is a schematic diagram of a vehicle according to an embodiment of the present disclosure.

### DETAILED DESCRIPTION

Embodiments of the present disclosure are described in detail below, and examples of the embodiments are shown in drawings. Same or similar elements or elements having same or similar functions are represented by same or similar reference numerals throughout the description. The embodiments described below with reference to the drawings are exemplary and are merely used for explaining the present disclosure, and should not be construed as a limitation on the present disclosure.

In the description of the present disclosure, it should be understood that orientation or position relationships indicated by terms such as "center", "longitudinal", "transverse", "length", "width", "thickness", "up", "down", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the drawings, and are merely used for ease and brevity of the description of the present disclosure, rather than indicating or implying that the mentioned device or element needs to have a particular orientation or be constructed and operated in a particular orientation. Therefore, such terms should not be construed as a limitation on the present disclosure. In addition, a feature defined with "first" or "second" may explicitly or implicitly include one or more features. In the description of the present disclosure, unless otherwise stated, "multiple" means two or more.

In the description of the present disclosure, it should be noted that unless otherwise explicitly specified or defined, terms "mount", "connect", and "connection" are to be understood in a broad sense. For example, the connection may be a fixed connection, a detachable connection, or an integral connection; or may be a mechanical connection or an electrical connection; or may be a direct connection, an indirect connection through a middle medium, or internal communication between two elements. A person of ordinary skill in the art may understand the specific meanings of the foregoing terms in the present disclosure based on specific situations.

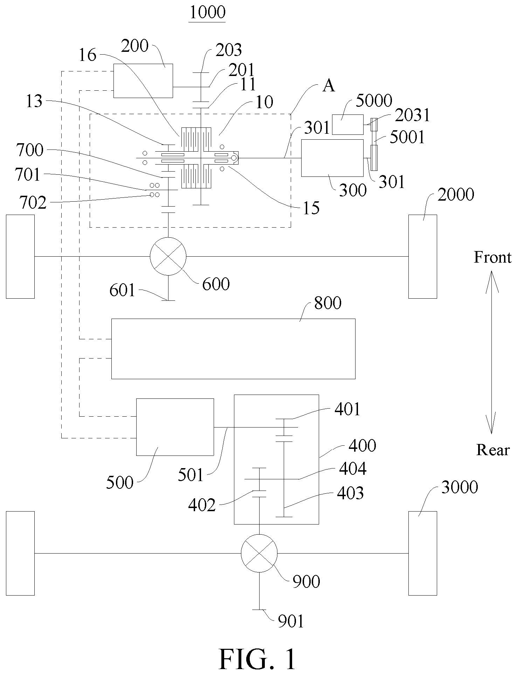

A powertrain system 1000 in the embodiments of the present disclosure is described below with reference to FIG. 1 to FIG. 6. The powertrain system 1000 may be mounted to a vehicle 6000.

As shown in FIG. 1 to FIG. 5, the powertrain system 1000 of the vehicle 6000 in the embodiments of the present disclosure includes a conversion device 10, a first motor 200, a second motor 5000, and an engine 300. At least one of the first motor 200 and the engine 300 is configured to selectively output power to a first traveling end by means of the conversion device 10. The first traveling end may be front wheels 2000 or rear wheels 3000 of the vehicle 6000. The present disclosure is described by using an example in which the first traveling end is the front wheels 2000. In other words, the first motor 200 may selectively output the power to the first traveling end by means of the conversion device 10, the engine 300 may selectively output the power to the first traveling end by means of the conversion device 10, and the first motor 200 and the engine 300 may simultaneously selectively output the power to the first traveling end by means of the conversion device 10. After the power is outputted to the first traveling end, the wheels can rotate to achieve traveling of the vehicle 6000. That the engine 300 is configured to selectively output the power to the first motor 200 by means of the conversion device 10 may alternatively be understood as that the engine 300 may output the power to the first motor 200 by means of the conversion device 10, but the engine 300 may not output the power to the first motor 200. When the engine 300 outputs the power to the first motor 200 by means of the conversion device 10, the engine 300 can drive the first motor 200 to generate electricity. The first motor 200 may be configured to selectively output the power to the engine 300 by means of the conversion device 10, to drive the engine 300 to start and ignite.

When the engine 300 is arranged on a left side of the conversion device 10, a rotation direction of an engine output shaft 301 of the engine 300 is opposite to a rotation direction of the front wheels 2000 when the engine 300 outputs the power to the first traveling end. As shown in FIG. 1, when the engine 300 is arranged on a right side of the conversion device 10, the rotation direction of the engine output shaft 301 of the engine 300 is the same as the rotation direction of the front wheels 2000 when the engine 300 outputs the power to the first traveling end. When at least one of the first motor 200 and the engine 300 selectively outputs the power to the front wheels 2000 or the rear wheels 3000 at the traveling end by means of the conversion device 10, for example, when at least one of the first motor 200 and the engine 300 selectively outputs the power to the front wheels 2000 by means of the conversion device 10, the rotation direction of the engine output shaft 301 of the engine 300 is the same as the rotation direction of the front wheels 2000. In an embodiment, in a rear-to-front direction of the vehicle 6000, the engine 300 is arranged on the left side of the conversion device 10. The conversion device 10 is in driving connection with a front differential 600 of front axle wheels. When the engine 300 is arranged on the left side of the conversion device 10, the rotation direction of the engine output shaft 301 of the engine 300 can be opposite to the rotation direction of the front wheels 2000. Since the rotation direction of the engine output shaft 301 of the engine 300 is opposite to the rotation direction of the front wheels 2000, the front wheels 2000 can be driven to rotate without a need to arrange a reversing gear 700 between the conversion device 10 and the front differential 600, to achieve the traveling of the vehicle 6000. In addition, by switching the first motor 200 and/or the engine 300 to selectively output power to the first traveling end by means of the same conversion device 10, and by configuring the engine 300 to selectively output power to the first motor 200 by means of the conversion device 10, the vehicle 6000 can be switched to a different driving mode. In this way, driving performance of the vehicle 6000 is improved, and the structure of the powertrain system 1000 can be simplified, thereby achieving a compact structure of the powertrain system 1000.

The second motor 5000 is in driving connection with the engine 300, so that the powertrain system 1000 has a first simultaneous driving and electricity-generating mode. In the first simultaneous driving and electricity-generating mode, the first motor 200 outputs the power to the first traveling end by means of the conversion device 10, and the second motor 5000, driven by the engine 300, generates electricity. The electric energy generated by the second motor 5000 may be supplied to the first motor 200, to reduce a discharge output of an energy storage unit 800 of the powertrain system 1000, and the electric energy generated by the second motor 5000 may be supplied to and stored in the energy storage unit 800, to charge the energy storage unit 800. In this way, a power retention capability of the powertrain system 1000 is improved, so that the vehicle 6000 can be supplemented with electric power, thereby preventing lack of power in the vehicle 6000, and effectively avoiding impact on use of a pure electric driving mode of the vehicle 6000.

The conversion device 10, the first motor 200, and the engine 300 cooperate with each other, to be specific, the first motor 200 and the engine 300 selectively output the power to the traveling end by means of the same conversion device 10, so that a reversing gear does not need to be arranged on the powertrain system 1000, which can simplify the structure of the powertrain system 1000, and achieve a compact structure of the powertrain system 1000. In addition, by switching the first motor 200 and/or the engine 300 to selectively output power to the first traveling end by means of the same conversion device 10, and by configuring the engine 300 to selectively output power to the first motor 200 by means of the conversion device 10, the vehicle 6000 can be switched to a different driving mode. In this way, driving performance of the vehicle 6000 is improved. In addition, the second motor 5000 generates electricity, which can supplement the vehicle 6000 with electric power, to prevent lack of electric power of the vehicle 6000, thereby effectively avoiding impact on use of the pure electric driving mode of the vehicle 6000.

In some embodiments of the present disclosure, as shown in FIG. 1, the second motor 5000 is arranged on the engine 300, which achieves an overall compact structure of the second motor 5000 and the engine 300, and facilitates driving connection between the second motor 5000 and the engine 300.

In some embodiments of the present disclosure, as shown in FIG. 1, the engine output shaft 301 of the engine 300 is parallel to a second motor output shaft 2031 of the second motor 5000, which facilitates driving connection between the engine 300 and the second motor 5000.

In some embodiments of the present disclosure, as shown in FIG. 1, the engine output shaft 301 of the engine 300 is in driving connection with the second motor output shaft 2031 of the second motor 5000 by means of a belt pulley. In an embodiment, the engine output shaft 301 is provided with a first pulley, and the second motor output shaft 2031 is provided with a second pulley. The first pulley and the second pulley are connected by means of a belt 5001. The belt 5001 is sleeved outside the first pulley and the second pulley. When the engine output shaft 301 rotates, the belt 5001 drives the second pulley to rotate, to cause the second motor 5000 to generate electricity.

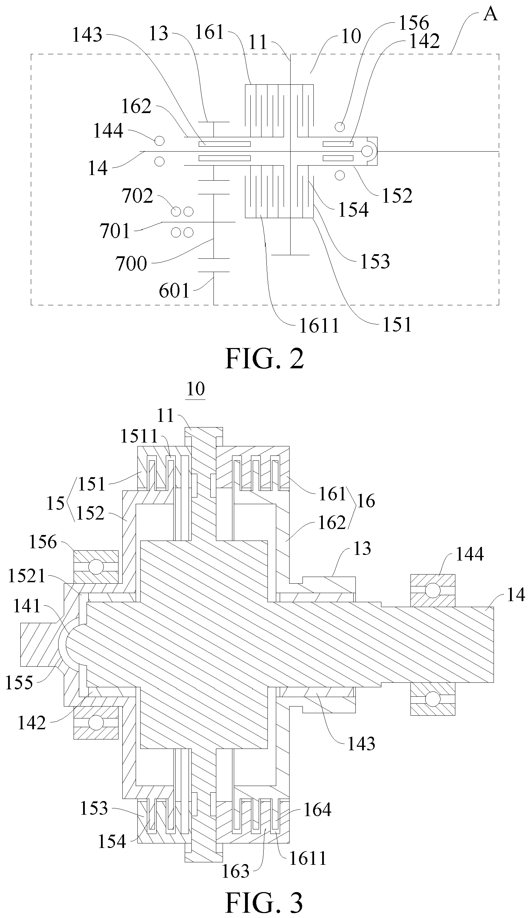

In some embodiments of the present disclosure, as shown in FIG. 2 and FIG. 3, the conversion device 10 may include a first clutch 15, a second clutch 16, and a transmission member 11. The first motor 200 is in driving connection with the transmission member 11. The first motor 200 is configured to output the power to the transmission member 11. The engine 300 is connected with the first clutch 15, to cause the engine 300 to selectively output the power to the first motor 200. The second clutch 16 is connected between the transmission member 11 and the first traveling end, to cause the transmission member 11 to be selectively connected with the first traveling end. The first clutch 15 is connected between the engine output shaft 301 and the transmission member 11. The first clutch 15 is connected or disconnected, to cause the engine 300 to selectively output the power to the first motor 200. Specifically, when the first clutch 15 is connected, the engine 300 may output the power to the first motor 200. When the first clutch 15 is disconnected, the engine 300 cannot output the power to the first motor 200. In this way, the engine 300 can selectively output the power to the first motor 200. The second clutch 16 is connected between the transmission member 11 and the front differential 600 of the front axle wheels. The second clutch 16 is connected or disconnected to selectively connect the transmission member 11 to the front wheels 2000. Specifically, when the second clutch 16 is connected, the transmission member 11 is connected with the front wheels 2000, and the power on the transmission member 11 may be transmitted to the front wheels 2000 to drive the vehicle 6000 to travel. When the second clutch 16 is disconnected, the transmission member 11 is not connected with the front wheels 2000, and the power on the transmission member 11 cannot be transmitted to the front wheels 2000. In an embodiment, a torque of the first clutch 15 may be greater than a torque of the second clutch 16.

In some embodiments of the present disclosure, the first clutch 15 and the second clutch 16 are arranged on two axial sides of the transmission member 11. The first clutch 15 is arranged on a side of the transmission member 11 close to the engine 300, and the second clutch 16 is arranged on a side of the transmission member 11 away from the engine 300, so that the conversion device 10 has a compact structure.

In some embodiments of the present disclosure, as shown in FIG. 3, the first clutch 15 may include a first housing 151 and a first transmission portion 152. The first housing 151 is fixedly connected with the transmission member 11. In an embodiment, the first housing 151 may be fixedly connected to the transmission member 11 by means of a bolt. The first housing 151 may alternatively be welded to the transmission member 11, or the first housing 151 may be snap-fitted to the transmission member 11, to achieve fixed connection between the first housing 151 and the transmission member 11. The first transmission portion 152 is connected with the engine 300. The first transmission portion 152 is selectively connected to the first housing 151 by means of a clutch plate.

The first housing 151 includes a housing, within which a first groove 1511 is formed. A first clutch plate 153 is arranged in the first groove. The first transmission portion 152 is configured to selectively connect to the first clutch plate 153 in the first groove 1511. The first transmission portion 152 is connected with the engine output shaft 301. In an embodiment, the first transmission portion 152 is fixedly connected with the engine output shaft 301. A fixed connection manner between the first transmission portion 152 and the engine output shaft 301 is not specifically limited. In an embodiment, multiple first clutch plates 153 are arranged. The multiple first clutch plates 153 are sequentially spaced apart in an axial direction of the conversion device 10. The first groove 1511 is formed between adjacent first clutch plates 153. The first transmission portion 152 includes at least one second clutch plate 154. For example, multiple second clutch plate 154 are arranged. The multiple second clutch plates 154 and the multiple first clutch plates 153 are arranged in one-to-one correspondence. The second clutch plates 154 extend into the first grooves 1511. The second clutch plates 154 are moved relative to the first clutch plates 153, so that the first clutch plates 153 are connected with or disconnected from the second clutch plates 154. In this way, the engine 300 can selectively output the power to the transmission member 11.

In some embodiments of the present disclosure, as shown in FIG. 3, the second clutch 16 may include a second housing 161 and a second transmission portion 162. The second housing 161 is fixedly connected with the transmission member 11. In an embodiment, the second housing 161 may be fixedly connected to the transmission member 11 by means of a bolt. The second housing 161 may alternatively be welded to the transmission member 11, or the second housing 161 may be snap-fitted to the transmission member 11, to achieve fixed connection between the second housing 161 and the transmission member 11.

The second housing 161 includes a housing, within which a second groove 1611 is formed. A third clutch plate 163 is arranged in the second groove 1611. The second transmission portion 162 is configured to selectively connect to the second groove 1611. The second transmission portion 162 is connected with the front differential 600, and the second transmission portion 162 is in driving connection with the front differential 600. In an embodiment, multiple third clutch plates 163 are arranged. The multiple third clutch plates 163 are sequentially spaced apart in the axial direction of the conversion device 10. The second groove 1611 is formed between adjacent third clutch plates 163. The second transmission portion 162 includes at least one fourth clutch plate 164. For example, multiple fourth clutch plates 164 are arranged. The multiple fourth clutch plates 164 and the multiple second grooves 1611 are arranged in one-to-one correspondence. The fourth clutch plates 164 extend into the second grooves 1611. The fourth clutch plates 164 are moved relative to the third clutch plates 163, so that the third clutch plates 163 and the fourth clutch plates 164 are connected or disconnected. In this way, the transmission member 11 can selectively output the power to the front differential 600, thereby selectively outputting the power to the front wheels 2000 to drive the vehicle 6000 to travel.

In some embodiments of the present disclosure, as shown in FIG. 3, the first housing 151 is fixedly connected with the transmission member 11 and is located on the side of the transmission member 11 close to the engine, and the second housing 161 is fixedly connected with the transmission member 11 and is located on the side of the transmission member 11 away from the engine. In other words, the first housing 151 is arranged on one side of the transmission member 11, and the second housing 161 is arranged on the other side of the transmission member 11. Arranging the first housing 151 and the second housing 161 respectively on the two axial sides of the transmission member 11 can reduce a radial dimension of the conversion device 10.

In some embodiments of the present disclosure, the first housing 151 and the second housing 161 are integrally formed with the transmission member 11. In other words, the first housing 151 and the transmission member 11 are formed in one piece, and the second housing 161 and the transmission member 11 are formed in one piece. In this way, connection strength between the first housing 151 and the transmission member 11 and connection strength between the second housing 161 and the transmission member 11 can be improved, which can avoid separation between the first housing 151 and the transmission member 11 and between the second housing 161 and the transmission member 11. In addition, additional steps of producing the first housing 151 and the second housing 161 can be omitted, mold development costs can be reduced, production costs of the conversion device 10 can be reduced, production efficiency of the conversion device 10 can be improved, and an integration degree can be further improved.

In some embodiments of the present disclosure, the transmission member 11 includes a gear, and an output shaft of the first motor is provided with a first motor gear 203. The first motor gear 203 and the transmission member 11 form a gear pair. The gear pair is configured to connect the first motor 200 to the engine 300. In this embodiment, connecting the first motor 200 to the engine by using the gear pair can accelerate generation of electricity, and can achieve integration of the first clutch 15 and the second clutch 16 by using the gear.

In some embodiments of the present disclosure, the first housing 151 is connected with the second housing 161 to form a clutch body. The transmission member 11 is arranged on the clutch body. The above may be understood as that the housing of the first clutch 15 is connected with the housing of the second clutch 16 to form a clutch body configured to mount the transmission member. Alternatively, the clutch body has teeth formed on an outer periphery, and is constructed as a gear. In this case, the first housing 151 and the second housing 161 are integrally formed with the transmission member 11.

In another embodiment, the first housing 151 and the second housing 161 are integrally formed to form the clutch body.

In some embodiments of the present disclosure, as shown in FIG. 1 to FIG. 3, the powertrain system 1000 may further include a support shaft 14. The transmission member 11 is connected with the support shaft 14, and the transmission member 11 is coaxially arranged with the support shaft 14. In an embodiment, the transmission member 11 may be arranged as a drive gear. The transmission member 11 may be sleeved outside the support shaft 14. The transmission member 11 is fixedly connected with the support shaft 14. A central axis of the transmission member 11 coincides with a central axis of the support shaft 14. The first transmission portion 152 and the second transmission portion 162 are rotatably sleeved on the support shaft 14. The first transmission portion 152 and the second transmission portion 162 are rotatable relative to the support shaft 14. In an embodiment, the first housing 151 and the second housing 161 are connected with the transmission member 11. In this way, the first clutch 15, the second clutch 16, and the transmission member 11 can be integrated on the same support shaft 14, so that the conversion device 10 can have a compact structure, a volume of the conversion device 10 is reduced, and the conversion device 10 occupies a small arrangement space, which facilitates mounting of the conversion device 10, facilitates arrangement of the powertrain system 1000 on the vehicle 6000, and improves production efficiency of the vehicle 6000.

In some embodiments of the present disclosure, as shown in FIG. 3, a cavity 1521 is formed on the first transmission portion 152. One end of the support shaft 14 is located in the cavity 1521 and is rotatably connected with the first transmission portion 152. It should be noted that, in an axial direction of the support shaft 14, an end portion of the support shaft 14 close to the first transmission portion 152 is located within the cavity 1521 and is rotatably connected with the first transmission portion 152. In an embodiment, the first transmission portion 152 is sleeved on the end portion of the support shaft 14 close to the first transmission portion 152. Since the support shaft 14 is rotatably connected with the first transmission portion 152, it can be ensured that the first transmission portion 152 is rotatable relative to the support shaft 14, thereby ensuring operating performance of the conversion device 10. In addition, since the end portion of the support shaft 14 close to the first transmission portion 152 is arranged within the cavity 1521, an axial dimension of the conversion device 10 can be reduced, so that the conversion device 10 has a more compact structure.

In some embodiments of the present disclosure, as shown in FIG. 3, a first limiting portion 155 is arranged in the cavity 1521, and a second limiting portion 141 is arranged on one end of the support shaft 14. The first limiting portion 155 and the second limiting portion 141 are mated to limit axial movement of the support shaft 14. It should be noted that, the second limiting portion 141 is arranged on the end portion of the support shaft 14 close to the first transmission portion 152, and the first limiting portion 155 is arranged on a bottom wall of the cavity 1521 opposite to the end portion of the support shaft 14. After the conversion device 10 is mounted to the support shaft 14, the support shaft 14 is abutted against and limited by the first limiting portion 155 and the second limiting portion 141 when subjected to an axial force toward the first transmission portion 152, to limit the axial movement of the support shaft 14, so that abnormal axial movement of the support shaft 14 can be avoided, thereby achieving limiting and protection when the support shaft 14 is subjected to a large axial force.

In some embodiments of the present disclosure, as shown in FIG. 3, the first limiting portion 155 may be arranged as a spherical groove, and the second limiting portion 141 may be arranged as a spherical protrusion. The spherical protrusion is fitted in the spherical groove, the spherical protrusion is arranged concentrically with the spherical groove, and an inner wall of the spherical groove is spaced apart from the spherical protrusion. After the conversion device 10 is mounted to the support shaft 14, the spherical protrusion is mounted in the spherical groove. Since the spherical protrusion and the spherical groove are arranged, it can be ensured that the first transmission portion 152 and the support shaft 14 are rotatable relative to each other, and even if the first limiting portion 155 and the second limiting portion 141 are in contact, it can still be ensured that the first transmission portion 152 and the support shaft 14 are rotatable relative to each other, thereby ensuring the operating performance of the conversion device 10.

In some embodiments of the present disclosure, as shown in FIG. 3, the powertrain system 1000 may further include a first bearing 142. The first transmission portion 152 is rotatably connected to the support shaft 14 by means of the first bearing 142. The first bearing 142 is sleeved on an outer side of the support shaft 14, and the first bearing 142 is arranged between the first transmission portion 152 and the support shaft 14, to achieve relative rotation between the first transmission portion 152 and the support shaft 14. In addition, the first bearing 142 is supported between the first transmission portion 152 and the support shaft 14, which can ensure that the first transmission portion 152 and the support shaft 14 rotate about a same axis, ensure that the first transmission portion 152 and the support shaft 14 rotate relatively smoothly, and avoid radial movement of the first transmission portion 152 relative to the support shaft 14.

In some embodiments of the present disclosure, the powertrain system 1000 may further include a housing (not shown in the figure). The first transmission portion 152 is rotatably connected with the housing. Since the first transmission portion 152 is connected with the housing while it is ensured that the first transmission portion 152 is rotatable relative to the support shaft 14, the first transmission portion 152 can be reliably mounted in the housing of the powertrain system 1000.

In some embodiments of the present disclosure, a connection position between the first transmission portion 152 and the housing is a first connection position, and a connection position between the first transmission portion 152 and the support shaft 14 is a second connection position. In the radial direction of the support shaft 14, an orthographic projection of the first connection position and an orthographic projection of the second connection position at least partially overlap. Since the orthographic projection of the first connection position and the orthographic projection of the second connection position have an overlapping region in the radial direction of support shaft 14, a radial load of the support shaft 14 can be transmitted to the housing by means of the first transmission portion 152, which prevents a life of the entire powertrain system 1000 from being affected by a shear force generated as a result of the first connection position and the second connection position being staggered with respect to each other in the radial direction of the support shaft 14.

In some embodiments of the present disclosure, as shown in FIG. 3, the powertrain system 1000 may further include a first bearing 142 and a second bearing 156. The first bearing 142 is arranged between the first transmission portion 152 and the support shaft 14, the first bearing 142 is sleeved on the outer side of the support shaft 14, and the first bearing 142 is connected between the first transmission portion 152 and the support shaft 14. The second bearing 156 is sleeved on an outer side of the first transmission portion 152. In the radial direction of the support shaft 14, an orthographic projection of the second bearing 156 and an orthographic projection of the first bearing 142 have an overlapping region. In some embodiments, the second bearing 156 is arranged at the foregoing first connection position, and the first bearing 142 is arranged at the foregoing second connection position. The first transmission portion 152 is rotatably connected to the housing by means of the second bearing 156. In this way, the radial load of the support shaft 14 can be transmitted to the housing by means of the first bearing 142, the first transmission portion 152, and the second bearing 156, to prevent the life of the entire powertrain system 1000 from being affected by a shear force generated as a result of the first bearing 142 and the second bearing 156 being staggered with respect to each other in the radial direction of the support shaft 14, thereby extending the service life of the powertrain system 1000.

In some embodiments of the present disclosure, as shown in FIG. 3, the powertrain system 1000 may further include a third bearing 143. The second transmission portion 162 is rotatably connected to the support shaft 14 by means of the third bearing 143. The third bearing 143 is sleeved on the outer side of the support shaft 14, and the third bearing 143 is connected between the second transmission portion 162 and the support shaft 14, to achieve relative rotation between the second transmission portion 162 and the support shaft 14. In addition, the third bearing 143 is supported between the second transmission portion 162 and the support shaft 14, which can ensure that the second transmission portion 162 and the support shaft 14 rotate about the same axis, ensure that the second transmission portion 162 and the support shaft 14 rotate relatively smoothly, and avoid radial movement of the second transmission portion 162 relative to the support shaft 14.

In some embodiments of the present disclosure, the powertrain system 1000 may further include a housing (not shown in the figure). An other end of the support shaft 14 is rotatably connected with the housing. The other end of the support shaft 14 refers to an end of the support shaft 14 away from the first transmission portion 152 in the axial direction of the support shaft 14. In this way, the support shaft 14 can be reliably mounted to the housing of the powertrain system 1000 while it can be ensured that the support shaft 14 is rotatable relative to the housing, so that the support shaft 14 can reliably support the conversion device 10, thereby ensuring the operating performance of the conversion device 10.

In some embodiments of the present disclosure, as shown in FIG. 3, the powertrain system 1000 may further include a fourth bearing 144. The other end of the support shaft 14 is rotatably connected to the housing by means of the fourth bearing 144. In some embodiments, the fourth bearing 144 is sleeved on the outer side of the support shaft 14, the fourth bearing 144 is connected between the support shaft 14 and the housing, and the support shaft 14 is mounted and fixed by means of the fourth bearing 144, to achieve that the support shaft 14 is rotatable relative to the housing. In this way, the support shaft 14 can be reliably mounted to the housing of the powertrain system 1000, and the support shaft 14 can reliably support the conversion device 10, thereby ensuring the operating performance of the conversion device 10.

In some embodiments of the present disclosure, as shown in FIG. 1 and FIG. 3, the front differential 600 has a first gear 601, the second clutch 16 is provided with a first output gear 13, and the first output gear 13 is meshed with the first gear 601. In some embodiments, the second transmission portion 162 of the second clutch 16 is provided with the first output gear 13. The first output gear 13 is sleeved on an outer side of the second transmission portion 162. The first output gear 13 may be integrally formed with the second transmission portion 162, to reduce mold development costs, and reduce the production costs of the conversion device 10. When the second transmission portion 162 is connected with the second housing 161, power of the transmission member 11 is transmitted to the front differential 600 by means of the second clutch 16, the first output gear 13, and the first gear 601. The power is transmitted to the front wheels 2000 of the vehicle 6000 by means of the front differential 600, to drive the vehicle 6000 to travel. In addition, by meshing the first gear 601 with the first output gear 13, the power may be reliably transmitted to the front differential 600.

In some embodiments of the present disclosure, as shown in FIG. 1, a central axis of the first gear 601 is parallel to a central axis of the first output gear 13. In this way, the first gear 601 and the first output gear 13 can be reliably meshed, to avoid separation between the first gear 601 and the first output gear 13. In this way, it can be ensured that the power is reliably transmitted to the front differential 600, wear between the first gear 601 and the first output gear 13 can be reduced, and service lives of the first gear 601 and the first output gear 13 can be extended.

In some embodiments of the present disclosure, as shown in FIG. 1, the powertrain system 1000 may further include an energy storage unit 800 (that is, the energy storage unit 800 in the foregoing embodiment). The energy storage unit 800 may be a battery pack. The energy storage unit 800 is electrically connected with the first motor 200 and the second motor 5000. The energy storage unit 800 can supply electricity to the first motor 200, to drive the first motor 200 to operate, so as to cause the first motor 200 to output the power to the transmission member 11. In this way, driving of the first motor 200 is achieved.

In some embodiments of the present disclosure, the first motor output shaft 201 of the first motor 200 is meshed with the transmission member 11 for transmission. In some embodiments, the first motor output shaft 201 may be provided with the first motor gear 203. The first motor gear 203 is meshed with the transmission member 11 for transmission. By meshing the first motor output shaft 201 and the transmission member 11, transmission of power from the first motor output shaft 201 to the transmission member 11 can be achieved, and transmission of power from the transmission member 11 to the first motor output shaft 201 can be achieved.

In some embodiments of the present disclosure, as shown in FIG. 1, the first motor output shaft 201 is parallel to the engine output shaft 301. In this way, the first motor 200 and the engine 300 can be conveniently arranged, and interference between the first motor 200 and the engine 300 can be avoided.

In some embodiments of the present disclosure, as shown in FIG. 1, the powertrain system 1000 may further include a third motor 500 (that is, the third motor 500 in the foregoing embodiment). The third motor 500 is configured to output the power to a second traveling end. The second traveling end may be the other of the front wheels 2000 and the rear wheels 3000 of the vehicle 6000. When the first traveling end is the front wheels 2000, the second traveling end is the rear wheels 3000, and when the first traveling end is the rear wheels 3000, the second traveling end is the front wheels 2000. The powertrain system 1000 may further include a transmission 400. The transmission 400 is connected between the third motor 500 and a rear differential 900 of rear axle wheels. The third motor 500 outputs power to the rear wheels 3000 by means of the transmission 400. In some embodiments, as shown in FIG. 1, the transmission 400 includes a transmission input gear 401 and a transmission output gear 402. The transmission input gear 401 is in driving connection with the transmission output gear 402. The transmission input gear 401 is fixedly connected with a second motor output shaft 501 of the third motor 500. The rear differential 900 has a second gear 901. The transmission output gear 402 is meshed with the second gear 901 for transmission. In some embodiments, the transmission 400 further includes a transmission drive gear 403. The transmission drive gear 403 and the transmission output gear 402 are mounted to a same connecting shaft. The transmission drive gear 403 is meshed with the transmission input gear 401. The transmission output gear 402 is meshed with the second gear 901 for transmission.

The third motor 500 is electrically connected with the energy storage unit 800. The energy storage unit 800 can supply power to the third motor 500 to cause the third motor 500 to operate. During the operation of the third motor 500, the second motor output shaft 501 of the third motor 500 drives the transmission input gear 401 to rotate. When the transmission input gear 401 rotates, the transmission drive gear 403 is driven to rotate, and the transmission drive gear 403 drives the transmission output gear 402 to rotate. When the transmission output gear 402 rotates, the second gear 901 is driven to rotate to output the power to the rear differential 900. The power is outputted to the rear wheels 3000 by means of the rear differential 900, to drive the rear wheels 3000 to rotate.

In some embodiments of the present disclosure, the powertrain system 1000 further has a second simultaneous driving and electricity-generating mode. In the second simultaneous driving and electricity-generating mode, the first motor 200 outputs the power to the first traveling end by means of the conversion device 10, the third motor 500 outputs the power to the second traveling end, and the second motor 5000, driven by the engine 300, generates electricity.

In some embodiments of the present disclosure, in the first simultaneous driving and electricity-generating mode, the first housing 151 is disconnected from the first transmission portion 152, the second housing 161 is connected with the second transmission portion 162, the engine 300 and the first motor 200 rotate, the power of the engine 300 is transmitted to the second motor 5000 to drive the second motor 5000 to generate electricity, and the power of the first motor 200 is transmitted to the second transmission portion 162 successively through the transmission member 11 and the second housing 161, so as to be transmitted to the first traveling end.

In some embodiments of the present disclosure, the powertrain system 1000 further has a second simultaneous driving and electricity-generating mode. In the second simultaneous driving and electricity-generating mode, the first housing 151 is disconnected from the first transmission portion 152, the second housing 161 is connected with the second transmission portion 162, the third motor 500 rotates, the power output of the third motor 500 is transmitted to the transmission connected with the second traveling end, so as to be transmitted to the second traveling end, the first motor 200 rotates, the power of the first motor 200 successively passes through the transmission member 11 and the second housing 161 to be transmitted to the second transmission portion 162, so as to be transmitted to the first traveling end, the engine 300 rotates, and the power of the engine 300 is transmitted to the second motor 5000, to cause the second motor 5000 to generate electricity.

In some embodiments of the present disclosure, the powertrain system 1000 further has a third simultaneous driving and electricity-generating mode. In the third simultaneous driving and electricity-generating mode, the first housing 151 is connected with the first transmission portion 152, the second housing 161 is connected with the second transmission portion 162, the engine 300 and the first motor 200 rotate, the power of the engine 300 is transmitted to the second motor 5000 to drive the second motor 5000 to generate electricity, the power of the first motor 200 is transmitted to the second transmission portion 162 successively through the transmission member 11 and the second housing 161, so as to be transmitted to the first traveling end, the third motor 300 rotates, the power of the third motor 300 is outputted to the transmission connected with the second traveling end, so as to be transmitted to the second traveling end, and the power of the engine 300 successively passes through the first transmission portion 152, the first housing 151, the transmission member 11, and the second housing 161 to be transmitted to the second transmission portion 162, so as to be transmitted to the first traveling end.

In some embodiments of the present disclosure, the powertrain system 1000 further has a first engine starting mode. In the first engine starting mode, the first housing 151 is connected with the first transmission portion 152, the second housing 161 is disconnected from the second transmission portion 162, the first motor 200 rotates, and the power outputted by the first motor 200 successively passes through the transmission member 11, the first housing 151, and the first transmission portion 152 to drive the engine 300 to start.

In some embodiments of the present disclosure, the powertrain system 1000 further has a second engine starting mode. In the second engine starting mode, the first housing 151 is connected with the first transmission portion 152, the second housing 161 is connected with the second transmission portion 162, the first motor 200 rotates, the power outputted by the first motor 200 successively passes through the transmission member 11, the first housing 151, and the first transmission portion 152 to drive the engine 300 to start, and the power outputted by the first motor 200 successively passes through the transmission member 11, the second housing 161, and the second transmission portion 162 to be transmitted to the first traveling end.

In some embodiments of the present disclosure, the powertrain system 1000 further has a third engine starting mode. In the third engine starting mode, the second motor 5000 rotates, and the power outputted by the second motor 5000 is transmitted to the engine 300 to drive the engine 300 to start.

In some embodiments of the present disclosure, the powertrain system 1000 further has a first electricity generating mode. In the first electricity generating mode, the second housing 161 is disconnected from the second transmission portion 162, the first housing 151 is connected with the first transmission portion 152, the engine 300 rotates, and the power outputted by the engine 300 successively passes through the first transmission portion 152, the first housing 151, and the transmission member 11 to be transmitted to the first motor 200, and to drive the first motor 200 to generate electricity.

In some embodiments of the present disclosure, the powertrain system 1000 further has a second electricity generating mode. In the second electricity generating mode, the first housing 151 is connected with the first transmission portion 152, the second housing 161 is connected with the second transmission portion 162, the engine 300 rotates, the power outputted by the engine 300 successively passes through the first transmission portion 152, the first housing 151, and the transmission member 11 to be transmitted to the first motor 200, and to drive the first motor 200 to generate electricity, and the power of the engine 300 successively passes through the first transmission portion 152, the first housing 151, the transmission member 11, and the second housing 161 to be transmitted to the second transmission portion 162, so as to be transmitted to the first traveling end.

In some embodiments of the present disclosure, the powertrain system 1000 further has a third electricity generating mode. In the third electricity generating mode, the first housing 151 is disconnected from the first transmission portion 152, the engine 300 rotates, and the power of the engine 300 is transmitted to the second motor 5000, to cause the second motor 5000 to generate electricity.

In some embodiments of the present disclosure, the powertrain system 1000 further has a fourth electricity generating mode. In the fourth electricity generating mode, the second housing 161 is disconnected from the second transmission portion 162, the first housing 151 is connected with the first transmission portion 152, the engine 300 rotates, the power of the engine 300 is transmitted to the second motor 5000, to cause the second motor 5000 to generate electricity, and the power outputted by the engine 300 successively passes through the first transmission portion 152, the first housing 151, and the transmission member 11 to be transmitted to the first motor 200, and to drive the first motor 200 to generate electricity.

In some embodiments of the present disclosure, the powertrain system 1000 further has a first energy feedback mode. In the first energy feedback mode, the first housing 151 is disconnected from the first transmission portion 152, the second housing 161 is connected with the second transmission portion 162, and the power of the first traveling end is outputted to the first motor 200 successively through the second transmission portion 162, the second housing 161, and the transmission member 11 to drive the first motor 200 to generate electricity.

In some embodiments of the present disclosure, the powertrain system 1000 further has a second energy feedback mode. In the second energy feedback mode, the first housing 151 is disconnected from the first transmission portion 152, the second housing 161 is disconnected from the second transmission portion 162, and the power of the second traveling end is outputted to the third motor 500 through the transmission connected with the second traveling end, so as to drive the third motor 500 to generate electricity.

In some embodiments of the present disclosure, the powertrain system 1000 further has a third energy feedback mode. In the third energy feedback mode, the first housing 151 is disconnected from the first transmission portion 152, the second housing 161 is connected with the second transmission portion 162, the power of the first traveling end is outputted to the first motor 200 successively through the second transmission portion 162, the second housing 161, and the transmission member 11 to drive the first motor 200 to generate electricity, and the power of the second traveling end is outputted to the third motor 500 through the transmission to drive the third motor 500 to generate electricity.

In some embodiments of the present disclosure, the powertrain system 1000 further has a first pure electric driving mode. In the first pure electric driving mode, the first housing 151 is disconnected from the first transmission portion 152, the second housing 161 is connected with the second transmission portion 162, the first motor 200 rotates, the power of the first motor 200 is transmitted to the second transmission portion 162 successively through the transmission member 11 and the second housing 161, so as to be transmitted to the first traveling end.

In some embodiments of the present disclosure, the powertrain system 1000 further has a second pure electric driving mode. In the second pure electric driving mode, the first housing 151 is disconnected from the first transmission portion 152, the second housing 161 is disconnected from the second transmission portion 162, the third motor 500 rotates, and the power outputted by the third motor 500 is transmitted to the transmission, so as to be transmitted to the second traveling end.

In some embodiments of the present disclosure, the powertrain system 1000 further has a third pure electric driving mode. In the third pure electric driving mode, the first housing 151 is disconnected from the first transmission portion 152, the second housing 161 is connected with the second transmission portion 162, the third motor 500 rotates, the power outputted by the third motor 500 is transmitted to the transmission, so as to be transmitted to the second traveling end, the first motor 200 rotates, and the power of the first motor 200 is transmitted to the second transmission portion 162 successively through the transmission member 11 and the second housing 161, so as to be transmitted to the first traveling end.

In some embodiments of the present disclosure, the powertrain system 1000 further has a first hybrid driving mode. In the first hybrid driving mode, the first housing 151 is connected with the first transmission portion 152, the second housing 161 is connected with the second transmission portion 162, the engine 300 and the first motor 200 rotate, the power of the engine 300 successively passes through the first transmission portion 152, the first housing 151, the transmission member 11, and the second housing 161 to be transmitted to the second transmission portion 162, so as to be transmitted to the first traveling end,
the power of the first motor 200 successively passes through the transmission member 11 and the second housing 161 to be transmitted to the second transmission portion 162, so as to be transmitted to the first traveling end.

In some embodiments of the present disclosure, the powertrain system 1000 further has a second hybrid driving mode. In the second hybrid driving mode, the first housing 151 is connected with the first transmission portion 152, the second housing 152 is connected with the second transmission portion 162, the engine 300 rotates, the power of the engine 300 successively passes through the first transmission portion 152, the first housing 151, the transmission member 11, and the second housing 161 to be transmitted to the second transmission portion 162, so as to be transmitted to the first traveling end,
the third motor 500 rotates, and the power of the third motor 500 is outputted to the transmission to transmit the power to the second traveling end.

In some embodiments of the present disclosure, the powertrain system 1000 further has a third hybrid driving mode. In the third hybrid driving mode, the first housing 151 is connected with the first transmission portion 152, the second housing 161 is connected with the second transmission portion 162, the engine 300 and the first motor 200 rotate, the power of the engine 300 successively passes through the first transmission portion 152, the first housing 151, the transmission member 11, and the second housing 161 to be transmitted to the second transmission portion 162, so as to be transmitted to the first traveling end, the power of the first motor 200 successively passes through the transmission member 11 and the second housing 161 to be transmitted to the second transmission portion 162, so as to be transmitted to the first traveling end, the third motor 500 rotates, the power of the third motor 500 is outputted to the transmission, so as to be transmitted to the second traveling end, and the power of the engine 300 is transmitted to the second motor 5000, to cause the second motor 5000 to generate electricity, thereby improving electric retention performance.

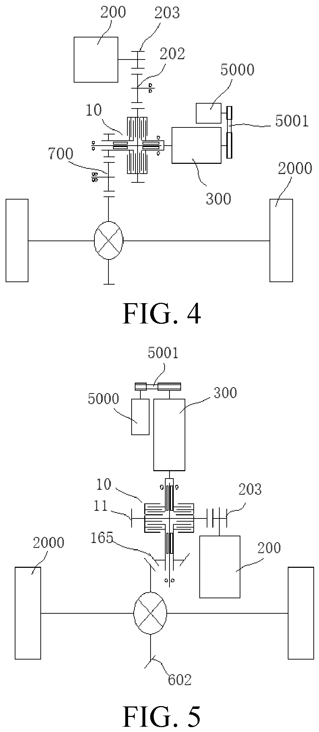

In some embodiments of the present disclosure, as shown in FIG. 1 and FIG. 4, the powertrain system 1000 may further include a reversing gear 700. In the rear-to-front direction of the vehicle 6000, THE engine 300 is arranged on the right side of the conversion device 10. The second clutch 16 is in driving connection with the front wheels 2000 by means of the reversing gear 700, so that the rotation direction of the engine output shaft 301 is the same as the rotation direction of the front wheels 2000 when the engine 300 outputs the power to the traveling end. Since the rotation direction of the engine output shaft 301 of the engine 300 does not change, when the engine 300 is arranged on the right side of the conversion device 10, if the reversing gear 700 is not arranged between the second clutch 16 and the front wheels 2000, the rotation direction of the engine output shaft 301 is opposite to the rotation direction of the front wheels 2000 when the engine 300 outputs the power to the traveling end. Therefore, when the power is outputted to the front wheels 2000, the front wheels 2000 rotates toward a rear side of the vehicle 6000, and therefore the vehicle 6000 cannot travel forward. In the present disclosure, the second clutch 16 is in driving connection with the front wheels 2000 by means of the reversing gear 700. Through reversing by the reversing gear 700, the rotation direction of the engine output shaft 301 is the same as the rotation direction of the front wheels 2000 when the engine 300 outputs the power to the front wheels 2000, so as to drive the vehicle 6000 to travel forward, thereby ensuring normal operation of the vehicle 6000.

In some embodiments of the present disclosure, as shown in FIG. 1 and FIG. 4, the powertrain system 1000 may further include a reversing shaft 701. The reversing gear 700 is mounted to the reversing shaft 701. The reversing shaft 701 is mounted to the housing of the powertrain system 1000 by means of a reversing bearing 702. In an embodiment, one end of the reversing shaft 701 is mounted to the housing of the powertrain system 1000 by means of the reversing bearing 702, and an other end of the reversing shaft 701 is arranged to be suspended. In this way, axial and radial dimensions of the powertrain system 1000 can be reduced.

In some embodiments of the present disclosure, as shown in FIG. 4, the first motor gear 203 of the first motor output shaft 201 and the transmission member 11 have a first intermediate gear 202 meshed therebetween, which may also be understood as that the first intermediate gear 202 is meshed between the first motor gear 203 and the transmission member 11. In an embodiment, the first intermediate gear 202 is rotatably mounted to the housing. The first intermediate gear 202 transmits power between the first motor output shaft 201 and the transmission member 11. Different from the embodiment in FIG. 1, in this embodiment, the first motor gear 203 and the transmission member 11 have the intermediate gear 202 meshed therebetween.

In some embodiments of the present disclosure, as shown in FIG. 5, the second clutch 16 is in driving connection with the differential of the traveling end (that is, the front differential 600) by means of a bevel gear. As shown in FIG. 5, the axial direction of the conversion device 10 extends in a front-to-rear direction of the vehicle 6000, and the support shaft 14 extends in the front-to-rear direction of the vehicle 6000. In an embodiment, in the rear-to-front direction of the vehicle 6000, the engine 300 is arranged on a front side of the conversion device 10, and the engine output shaft 301 extends in the front-to-rear direction of the vehicle 6000. In an embodiment, the front differential 600 of the traveling end has a first bevel gear 602, and the second clutch 16 is provided with a second bevel gear 165. The second transmission portion 162 of the second clutch 16 is provided with the second bevel gear 165. The first bevel gear 602 is meshed with the second bevel gear 165 for transmission, to change a transmission direction of the power. In this embodiment, the power is outputted in the front-rear direction of the vehicle 6000 toward the conversion device 10. By meshing the first bevel gear 602 with the second bevel gear 165 for transmission, the transmission direction of the power may be changed after the power is transmitted to the first bevel gear 602. In this way, the power is transmitted to the front wheels 2000 in a width direction of the vehicle 6000, thereby ensuring normal operation of the vehicle 6000.

It should be noted that, the conversion device 10, the first motor 200, and the engine 300 are mechanically connected to form a front power assembly. The front power assembly can drive the front wheels 2000 to rotate. The transmission 400, the third motor 500, and the rear differential 900 are mechanically connected to form a rear electric assembly. The rear electric assembly can drive the rear wheels 3000 to rotate. The energy storage unit 800 is electrically connected with both the first motor 200 and the third motor 500.

As shown in FIG. 1, the powertrain system 1000 is mounted to the vehicle 6000, to achieve multiple functions of the vehicle 6000. A specific description is as follows:

A function of starting the engine 300 when the first motor 200 is in an unloaded state: In this functional state, the second transmission portion 162 is disconnected from the second housing 161, and the first motor 200 is in a static state. The energy storage unit 800 starts to supply power to the first motor 200, to cause the first motor 200 to start to operate from the static state. Then the first transmission portion 152 is connected with the first housing 151, to transmit the power to the engine 300 by means of the first motor gear 203, the transmission member 11, the first housing 151, and the first transmission portion 152, so as to drag the engine 300 to start and ignite.

A function of starting the engine 300 when first motor 200 is in a loaded state: In this functional state, the second housing 161 is connected with the second transmission portion 162, the energy storage unit 800 supplies power to the first motor 200, the first motor 200 is in a loaded operating state, and the first transmission portion 152 starts to form sliding friction connection with the first housing 151, to transmit the power to the engine 300 by means of the first transmission portion 152, so as to drag the engine 300 to start and ignite.

A function of generating electricity when the engine 300 is connected in series: In this functional state, the engine 300 is in an operating state after ignition, the second transmission portion 162 is disconnected from the second housing 161, the first housing 151 starts to form connection with the first transmission portion 152, the engine 300 transmits the power to the first motor 200 by means of the first transmission portion 152, the first housing 151, the transmission member 11, and the first motor gear 203, and the first motor 200 operates and generates electricity and supplies the electrical energy to the energy storage unit 800 and/or the third motor 500.

A function of generating electricity when the engine 300 is connected in parallel: In this functional state, the engine 300 is in an operating state after ignition, the first housing 151 is connected with the first transmission portion 152, the second transmission portion 162 is connected with the second housing 161, the engine 300 drives the vehicle 6000 to operate and drags the first motor 200 to rotate, the first motor 200 enters a generator mode, and the engine 300 drives the first motor 200 to generate electricity and supply the electrical energy to the energy storage unit 800 and/or the third motor 500.

A function of recycling braking energy by the third motor 500 during traveling: In this functional state, the second transmission portion 162 is disconnected from the second housing 161, the first transmission portion 152 is disconnected from the first housing 151, the vehicle 6000 transmits the power to the third motor 500 by means of the rear axle wheels (that is, a rear transmission shaft), the rear differential 900, and the transmission 400, and the third motor 500 operates and generates electricity and supplies the electrical energy to the energy storage unit 800 and/or the first motor 200. The function is adapted to medium-scale and small-scale braking conditions.

A function of recycling braking energy jointly by the first motor 200 and the third motor 500 during traveling: In the functional state, the second transmission portion 162 is connected with the second housing 161, the first transmission portion 152 is disconnected from the first housing 151, the vehicle 6000 transmits the power to the third motor 500 by means of the rear axle wheels (that is, the rear transmission shaft), the rear differential 900, and the transmission 400, the power is transmitted to the first motor 200 by means of the front axle wheels (that is, the front transmission shaft), the front differential 600, and the conversion device 10, and the first motor 200 and the third motor 500 operate together and generate electricity and supply the electrical energy to the energy storage unit 800. The function is applicable to medium-scale and large-scale braking conditions.

After the powertrain system 1000 is mounted to the vehicle 6000, various traveling modes of the vehicle 6000 can be achieved. A specific implementation is as follows:

An electric vehicle (EV) front-wheel driving mode: In this mode, the second transmission portion 162 is connected with the second housing 161, the first transmission portion 152 is disconnected from the first housing 151, the energy storage unit 800 supplies the power to the first motor 200, the first motor 200 operates and transmits the power to the front wheels 2000 by means of the first motor gear 203, the transmission member 11, the second housing 161, the second transmission portion 162, the first output gear 13, the reversing gear 700, the first gear 601, the front differential 600, and the front transmission shaft, to drag the vehicle to operate.

An EV rear-wheel driving mode: In this mode, the second transmission portion 162 is disconnected from the second housing 161, the first transmission portion 152 is disconnected from the first housing 151, the energy storage unit 800 supplies the power to the third motor 500, the third motor 500 operates and transmits the power to the rear wheels 3000 by means of the transmission 400, the rear differential 900, the second gear 901, and the rear transmission shaft, to drag the vehicle to operate.

An EV four-wheel driving mode 1 (a normal operating condition): In this mode, the second transmission portion 162 is connected with the second housing 161, the first transmission portion 152 is disconnected from the first housing 151, the energy storage unit 800 supplies the power to the third motor 500, the third motor 500 operates and transmits the power to the front wheels 2000 by means of the first motor gear 203, the transmission member 11, the second housing 161, the second transmission portion 162, the first output gear 13, the reversing gear 700, the first gear 601, the front differential 600, and the front transmission shaft, the energy storage unit 800 simultaneously supplies the power to the third motor 500, the third motor 500 operates and transmits the power to the rear wheels 3000 by means of the transmission 400, the rear differential 900, the second gear 901, and the rear transmission shaft, and the first motor 200 and the third motor 500 operate together to drag the vehicle to operate.

An EV four-wheel driving mode 2 (a power retention condition): In this mode, the second transmission portion 162 is connected with the second housing 161, the first transmission portion 152 is disconnected from the first housing 151, the energy storage unit 800 supplies the power to the first motor 200, the first motor 200 operates and transmits the power to the front wheels 2000 by means of the first motor gear 203, the transmission member 11, the second housing 161, the second transmission portion 162, the first output gear 13, the reversing gear 700, the first gear 601, the front differential 600, and the front transmission shaft, the energy storage unit 800 simultaneously supplies the power to the third motor 500, the third motor 500 operates and transmits the power to the rear wheels 3000 by means of the transmission 400, the rear differential 900, the second gear 901, and the rear transmission shaft, and the first motor 200 and the third motor 500 operate together to drag the vehicle to operate. In addition, the engine 300 is in an operating state, which drives the second motor 5000 to generate electricity, and to supply the electric energy to the first motor 200, so as to reduce a discharge output of the energy storage unit 800.

An HEV front-wheel driving mode: In this mode, the engine 300 is in an operating state after ignition, the second transmission portion 162 is connected with the second housing 161, the first transmission portion 152 is connected with the first housing 151, the engine 300 transmits the power to the front wheels 2000 by means of the first transmission portion 152, the first housing 151, the second transmission portion 162, the first output gear 13, the reversing gear 700, the first gear 601, the front differential 600, and the front transmission shaft, to drag the vehicle to operate. In case of insufficient power, the energy storage unit 800 supplies the power to the first motor 200 to help the engine 300 drive the vehicle to operate. In case of abundant power, the first motor 200 generates electricity and supplies the electric energy to the energy storage unit 800.

A hybrid electric vehicle (HEV) rear-wheel driving mode: In this mode, the engine 300 is in an operating state after ignition, the second transmission portion 162 is disconnected from the second housing 161, the first transmission portion 152 is connected with the first housing 151, the engine 300 transmits the power to the first motor 200 by means of the first transmission portion 152, the first housing 151, the transmission member 11, the first motor gear 203, and the first motor 200 operates and generates electricity and supplies the electrical energy to the third motor 500, the third motor 500 operates and transmits the power to the rear wheels 3000 by means of the transmission 400, the rear differential 900, and the rear transmission shaft, to drag the vehicle to operate. In case of insufficient power, the energy storage unit 800 supplements the third motor 500 with power to help drive the vehicle. In case of abundant power, the first motor 200 supplies excess electric energy to the energy storage unit 800.

An HEV four-wheel driving mode: In this mode, the engine 300 is in an operating state after ignition, the second transmission portion 162 is connected with the second housing 161, the first transmission portion 152 is connected with the first housing 151, the engine 300200 transmits the power to the front wheels 2000 by means of the first transmission portion 152, the first housing 151, the second transmission portion 162, the first output gear 13, the reversing gear 700, the first gear 601, the front differential 600, and the front transmission shaft, to drag the vehicle to operate, the energy storage unit 800 supplies the power to the third motor 500, the third motor 500 operates and transmits the power to the rear wheels 3000 by means of the transmission 400, the rear differential 900, and the rear transmission shaft, to drag the vehicle to operate. In case of insufficient power, the energy storage unit 800 supplies the power to the first motor 200 to help drive the vehicle to operate. In case of abundant power, the first motor 200 generates electricity and supplies the electric energy to the energy storage unit 800.

It should be noted that, data parameters such as a type (such as self-priming or supercharging) of the engine 300, a performance parameter (such as a displacement, a power, and a torque) of the engine 300, and a size parameter of the engine 300 are properly selected based on an actual situation. Types, performance parameters, and size parameters of the first motor 200 and the third motor 500 may be properly selected based on an actual situation.

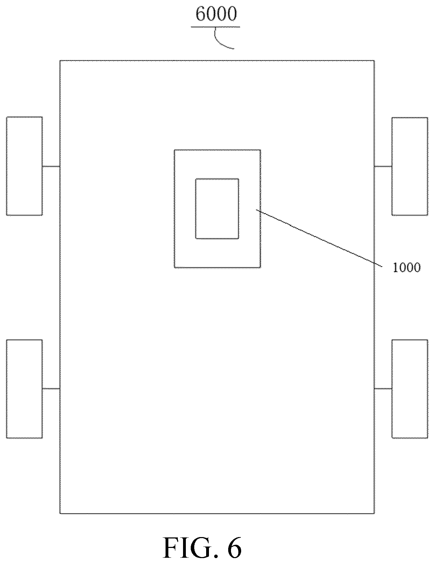

As shown in FIG. 6, the vehicle 6000 in the embodiments of the present disclosure includes the powertrain system 1000 in the foregoing embodiments. The second motor 5000 generates electricity, to supplement the vehicle 6000 with electric power, so as to prevent lack of electric power of the vehicle 6000, thereby effectively avoiding impact on the use of the pure electric driving mode of the vehicle 6000.

In the descriptions of this specification, the descriptions provided with reference to terms such as "an embodiment", "some embodiments", "an exemplary embodiment", "an example", "a specific example", or "some examples" mean that specific features, structures, materials, or characteristics described with reference to the embodiment or example are included in at least one embodiment or example of the present disclosure. In this specification, exemplary descriptions of the foregoing terms do not necessarily mean the same embodiment or example. In addition, the described specific features, structures, materials, or characteristics may be combined in a proper manner in any one or more embodiments or examples.

Although the embodiments of the present disclosure are shown and described, a person of ordinary skill in the art may understand that, various changes, modifications, replacements, and variations may be made to the embodiments without departing from the principle and spirit of the present disclosure, and the scope of the present disclosure is as defined by the appended claims and their equivalents.

## Claims

1. A powertrain system (1000), comprising:
a conversion device (10), a first motor (200), a second motor (5000), and an engine (300),
at least one of the first motor (200) and the engine (300) being configured to selectively output power to a first traveling end by means of the conversion device (10);
the engine (300) being configured to selectively output the power to the first motor (200) by means of the conversion device (10), to drive the first motor (200) to generate electricity; and
the second motor (5000) being in driving connection with the engine (300), so that the powertrain system (1000) has a first simultaneous driving and electricity-generating mode;
wherein in the first simultaneous driving and electricity-generating mode, the first motor (200) outputs the power to the first traveling end by means of the conversion device (10); and the second motor (5000), driven by the engine (300), generates electricity.

2. The powertrain system (1000) according to claim 1, wherein the second motor (5000) is arranged on the engine (300).

3. The powertrain system (1000) according to claim 1 or 2, wherein an engine output shaft (301) of the engine (300) is parallel to a second motor output shaft (2031) of the second motor (5000).

4. The powertrain system (1000) according to any of claims 1 to 3, wherein an engine output shaft (301) of the engine (300) is in driving connection with a second motor output shaft (2031) of the second motor (5000) by means of a belt pulley.

5. The powertrain system (1000) according to any of claims 1 to 4, further comprising:
a third motor (500), the third motor being configured to output power to a second traveling end.

6. The powertrain system (1000) according to claim 5, wherein the powertrain system (1000) has a second simultaneous driving and electricity-generating mode; and in the second simultaneous driving and electricity-generating mode, the first motor (200) outputs the power to the first traveling end by means of the conversion device (10), the third motor (500) outputs the power to the second traveling end; and the second motor (5000), driven by the engine (300), generates electricity.

7. The powertrain system (1000) according to claim 5 or 6, wherein the conversion device (10) comprises:
a first clutch (15), a second clutch (16), and a transmission member (11); the first clutch (15) and the second clutch (16) are connected with the transmission member (11);
the first motor (200) is in driving connection with the transmission member (11);
the engine (300) is connected with the first clutch (15), to cause the engine (300) to selectively output the power to the first motor (200); and
the second clutch (16) is connected between the transmission member (11) and the first traveling end, to cause the transmission member (11) to be selectively connected with the first traveling end.

8. The powertrain system (1000) according to claim 7, wherein the first clutch (15) and the second clutch (16) are arranged on two axial sides of the transmission member (11); the first clutch (15) is arranged on a side of the transmission member (11) close to the engine (300); and the second clutch (16) is arranged on a side of the transmission member (11) away from the engine (300).

9. The powertrain system (1000) according to claim 7, wherein the first clutch (15) comprises a first housing (151) and a first transmission portion (152); the first housing (151) is fixedly connected with the transmission member (11); the first transmission portion (152) is connected with the engine (300); the first transmission portion (152) is selectively connected with the first housing (151) by means of a clutch plate; and
the second clutch (16) comprises a second housing (161) and a second transmission portion (162); the second housing (161) is fixedly connected with the transmission member (11); and the second transmission portion (162) is selectively connected with the second housing (161) by means of a clutch plate.

10. The powertrain system (1000) according to any of claims 1 to 9, further comprising an energy storage unit (800), the energy storage unit (800) being electrically connected with the first motor (200) and the second motor (5000).

11. The powertrain system (1000) according to claim 9, wherein in the first simultaneous driving and electricity-generating mode, the first housing (151) is disconnected from the first transmission portion (152), the second housing (161) is connected with the second transmission portion (162); the engine (300) and the first motor (200) rotate;
the power of the engine (300) is transmitted to the second motor (5000), to drive the second motor (5000) to generate electricity; and
the power of the first motor (200) is transmitted to the second transmission portion (162) successively through the transmission member (11) and the second housing (161), so as to be transmitted to the first traveling end.

12. The powertrain system (1000) according to claim 9, wherein the powertrain system further has a second simultaneous driving and electricity-generating mode, in the second simultaneous driving and electricity-generating mode, the first housing (151) is disconnected from the first transmission portion (152); the second housing (161) is connected with the second transmission portion (162);
the third motor (500) rotates; the power of the third motor (500) is outputted to a transmission connected with the second traveling end, so as to be transmitted to the second traveling end;
the first motor (200) rotates; the power of the first motor (200) is transmitted to the second transmission portion (162) successively through the transmission member (11) and the second housing (161), so as to be transmitted to the first traveling end;
the engine (300) rotates; and the power of the engine (300) is transmitted to the second motor (5000), to cause the second motor (5000) to generate electricity;
the powertrain system further has a third simultaneous driving and electricity-generating mode, in the third simultaneous driving and electricity-generating mode, the first housing (151) is connected with the first transmission portion (152); the second housing (161) is connected with the second transmission portion (162); the engine (300) and the first motor (200) rotate;
the power of the engine (300) is transmitted to the second motor (5000), to drive the second motor (5000) to generate electricity; the power of the engine (300) successively passes through the first transmission portion (152), the first housing (151), the transmission member (11), and the second housing (161) to be transmitted to the second transmission portion (162), so as to be transmitted to the first traveling end;
the power of the first motor (200) is transmitted to the second transmission portion (162) successively through the transmission member (11) and the second housing (161), so as to be transmitted to the first traveling end;
the third motor (300) rotates; and the power of the third motor (300) is outputted to a transmission connected with the second traveling end, so as to be transmitted to the second traveling end.

13. The powertrain system (1000) according to claim 9, wherein the powertrain system (1000) has a first engine starting mode, in the first engine starting mode, the first housing (151) is connected with the first transmission portion (152); the second housing (161) is disconnected from the second transmission portion (162); the first motor (200) rotates; and the power outputted by the first motor (200) successively passes through the transmission member (11), the first housing (151), and the first transmission portion (152) to drive the engine (300) to start;
the powertrain system (1000) further has a second engine starting mode, in the second engine starting mode, the first housing (151) is connected with the first transmission portion (152); the second housing (161) is connected with the second transmission portion (162); the first motor (200) rotates; the power outputted by the first motor (200) successively passes through the transmission member (11), the first housing (151), and the first transmission portion (152) to drive the engine (300) to start; and the power outputted by the first motor (200) successively passes through the transmission member (11), the second housing (161), and the second transmission portion (162) to be transmitted to the first traveling end;
the powertrain system (1000) further has a third engine starting mode; and in the third engine starting mode, the second motor (5000) rotates; and the power outputted by the second motor (5000) is transmitted to the engine (300) to drive the engine (300) to start.

14. The powertrain system (1000) according to claim 9, wherein the powertrain system further has a first electricity generating mode, in the first electricity generating mode, the second housing (161) is disconnected from the second transmission portion (162); the first housing (151) is connected with the first transmission portion (152); the engine (300) rotates; and the power outputted by the engine (300) successively passes through the first transmission portion (152), the first housing (151), and the transmission member (11) to be transmitted to the first motor (200), and to drive the first motor (200) to generate electricity;
the powertrain system further has a second electricity generating mode, in the second electricity generating mode, the first housing (151) is connected with the first transmission portion (152); the second housing (161) is connected with the second transmission portion (162); the engine (300) rotates; the power outputted by the engine (300) successively passes through the first transmission portion (152), the first housing (151), and the transmission member (11) to be transmitted to the first motor (200), and to drive the first motor (200) to generate electricity; and the power of the engine (300) successively passes through the first transmission portion (152), the first housing (151), the transmission member (11), and the second housing (161)to be transmitted to the second transmission portion (162), so as to be transmitted to the first traveling end;
the powertrain system further has a third electricity generating mode, in the third electricity generating mode, the first housing (151) is disconnected from the first transmission portion (152); the engine (300) rotates; and the power of the engine (300) is transmitted to the second motor (5000), so as to cause the second motor (5000) to generate electricity;
the powertrain system further has a fourth electricity generating mode, in the fourth electricity generating mode, the second housing (161) is disconnected from the second transmission portion (162); the first housing (151) is connected with the first transmission portion (152); the engine (300) rotates; the power of the engine (300) is transmitted to the second motor (5000), so as to cause the second motor (5000) to generate electricity, and the power outputted by the engine (300) successively passes through the first transmission portion (152), the first housing (151), and the transmission member (11) to be transmitted to the first motor (200), and to drive the first motor (200) to generate electricity.

15. The powertrain system (1000) according to claim 9, wherein the powertrain system further has a first energy feedback mode, in the first energy feedback mode, the first housing (151) is disconnected from the first transmission portion (152); the second housing (161) is connected with the second transmission portion (162); and the power of the first traveling end is outputted to the first motor (200) successively through the second transmission portion (162), the second housing (161), and the transmission member (11), so as to drive the first motor (200) to generate electricity;
the powertrain system further has a second energy feedback mode, in the second energy feedback mode, the first housing (151) is disconnected from the first transmission portion (152); the second housing (161) is disconnected from the second transmission portion (162); and the power of the second traveling end is outputted to the third motor (500) through the transmission connected with the second traveling end, so as to drive the third motor (500) to generate electricity;
the powertrain system further has a third energy feedback mode, in the third energy feedback mode, the first housing (151) is disconnected from the first transmission portion (152); the second housing (161) is connected with the second transmission portion (162); the power of the first traveling end is outputted to the first motor (200) successively through the second transmission portion (162), the second housing (161), and the transmission member (11), so as to drive the first motor (200) to generate electricity; and
the power of the second traveling end is outputted to the third motor (500) through the transmission, so as to drive the third motor (500) to generate electricity.

16. The powertrain system (1000) according to claim 9, wherein the powertrain system further has a first pure electric driving mode, in the first pure electric driving mode, the first housing (151) is disconnected from the first transmission portion (152); the second housing (161) is connected with the second transmission portion (162); the first motor (200) rotates; and the power of the first motor (200) is transmitted to the second transmission portion (162) successively through the transmission member (11) and the second housing (161), so as to be transmitted to the first traveling end;
the powertrain system further has a second pure electric driving mode, in the second pure electric driving mode, the first housing (151) is disconnected from the first transmission portion (152); the second housing (161) is disconnected from the second transmission portion (162); the third motor (500) rotates; and the power outputted by the third motor (500) is transmitted to the transmission, so as to be transmitted to the second traveling end;
the powertrain system further has a third pure electric driving mode, in the third pure electric driving mode, the first housing (151) is disconnected from the first transmission portion (152); the second housing (161) is connected with the second transmission portion (162); the third motor (500) rotates; the power outputted by the third motor (500) being transmitted to the transmission, so as to be transmitted to the second traveling end; the first motor (200) rotates; and the power of the first motor (200) is transmitted to the second transmission portion (162) successively through the transmission member (11) and the second housing (161), so as to be transmitted to the first traveling end.

17. The powertrain system (1000) according to claim 9, wherein the powertrain system further has a first hybrid driving mode, in the first hybrid driving mode, the first housing (151) is connected with the first transmission portion (152); the second housing (161) is connected with the second transmission portion (162); the engine (300) and the first motor (200) rotate; the power of the engine (300) successively passes through the first transmission portion (152), the first housing (151), the transmission member (11), and the second housing (161) to be transmitted to the second transmission portion (162), so as to be transmitted to the first traveling end; and
the power of the first motor (200) successively passes through the transmission member (11) and the second housing (161) to be transmitted to the second transmission portion (162), so as to be transmitted to the first traveling end;
the powertrain system further has a second hybrid driving mode, in the second hybrid driving mode, the first housing (151) is connected with the first transmission portion (152); the second housing (152) is connected with the second transmission portion (162); the engine (300) rotates; the power of the engine (300) successively passes through the first transmission portion (152), the first housing (151), the transmission member (11), and the second housing (161) to be transmitted to the second transmission portion (162), so as to be transmitted to the first traveling end;
the third motor (300) rotates; and the power of the third motor (300) is outputted to the transmission, so as to be transmitted to the second traveling end;
the powertrain system further has a third hybrid driving mode, in the third hybrid driving mode, the first housing (151) is connected with the first transmission portion (152); the second housing (161) is connected with the second transmission portion (162); the engine (300) and the first motor (200) rotate; the power of the engine (300) successively passes through the first transmission portion (152), the first housing (151), the transmission member (11), and the second housing (161) to be transmitted to the second transmission portion (162), so as to be transmitted to the first traveling end;
the power of the first motor (200) successively passes through the transmission member (11) and the second housing (161) to be transmitted to the second transmission portion (162), so as to be transmitted to the first traveling end;
the third motor (300) rotates; and the power of the third motor (300) is outputted to the transmission, so as to be transmitted to the second traveling end.

18. A vehicle (6000), comprising the powertrain system (1000) according to any of claims 1 to 17.
